# FASCICULE DE BREVET EUROPEEN

(11) **EP 0 603 032 B1**
(45) Date de publication et mention de la délivrance du brevet: **20.09.1995**
(21) Numéro de dépôt: 93402980.2
(22) Date de dépôt: 09.12.1993
(51) Int. Cl.: F16L 47/00

(54) **Tubulure munie de moyens de fixation pour circuit de fluide**
Rohrleitung mit Anschlussmöglichkeit für einen Flüssigkeitskreislauf
Pipeline-system having facilities for connecting it to a fluid circle

(30) Priorité: 09.12.1992 FR 9214862
(43) Date de publication de la demande: 22.06.1994
(73) Titulaire: VALEO THERMIQUE HABITACLE, 78320 Le Mesnil-Saint-Denis (FR)
(72) Inventeur: Martins, Carlos, F-78490 Montfort la Maury (FR)
(74) Mandataire: Gamonal, Didier

(56) Documents cités:
- DE-C- 3 604 923
- FR-A- 2 486 196

## Description

L'invention concerne un dispositif de raccordement pour un circuit de fluide comprenant au moins une tubulure et des moyens de fixation solidaires de celle-ci pour la liaison de l'une au moins de ses extrémités à un organe du circuit de fluide en vue d'établir une communication de fluide entre la tubulure et ledit organe.

De tels dispositifs, utilisés notamment pour raccorder un radiateur de refroidissement du moteur ou un radiateur de chauffage de l'habitacle à d'autres organes du circuit de refroidissement et de chauffage d'un véhicule automobile, sont habituellement réalisés par soudage ou par brasage de moyens de fixation métalliques sur une tubulure métallique. Les opérations de soudage ou de brasage sont longues et onéreuses et donnent facilement lieu à des défauts tels que le percement de la tubulure, entraînant la mise au rebut du dispositif.

FR-A-2 486 196 propose, dans le cas d'une tubulure comportant au moins deux coudes, de réaliser l'ensemble de celle-ci et des moyens de fixation par injection de matière plastique.

Le but de l'invention est d'éviter les inconvénients du brasage et du soudage, tout en conservant une tubulure métallique.

L'invention vise notamment un dispositif du genre défini en introduction, et prévoit que lesdits moyens de fixation sont formés dans une masse de matière plastique surmoulée sur la tubulure, celle-ci étant métallique.

D'autres caractéristiques, complémentaires ou alternatives, de l'invention sont énoncées ci-après :
- Des moyens de fixation surmoulés sont formés aux deux extrémités de la tubulure pour leur liaison respective à deux organes du circuit de fluide.
- La tubulure comporte au moins un coude.
- Il comprend deux tubulures métalliques juxtaposées et au moins une masse monobloc de matière plastique surmoulée sur les deux tubulures dans la région d'une extrémité de chacune d'elles, ladite masse monobloc assurant la solidarisation mutuelle des deux tubulures dans ladite région et constituant des moyens de fixation pour la liaison de celles-ci à au moins un organe du circuit.

L'invention vise également une utilisation du dispositif à deux tubulures défini ci-dessus, dans laquelle les moyens de fixation relient les deux tubulures à un même organe du circuit.

Cet organe est notamment un radiateur de refroidissement et/ou de chauffage de véhicule automobile, les tubulures étant reliées respectivement à une entrée de fluide et à une sortie de fluide du radiateur.

D'autres avantages de l'invention apparaîtront à l'examen de la description détaillée ci-après, et des dessins annexés, sur lesquels :

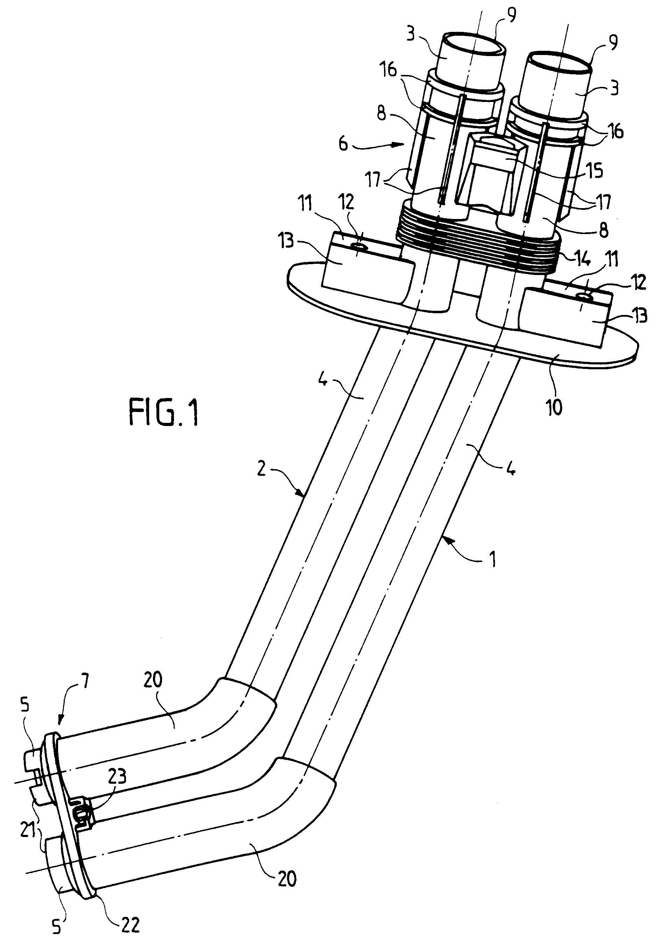

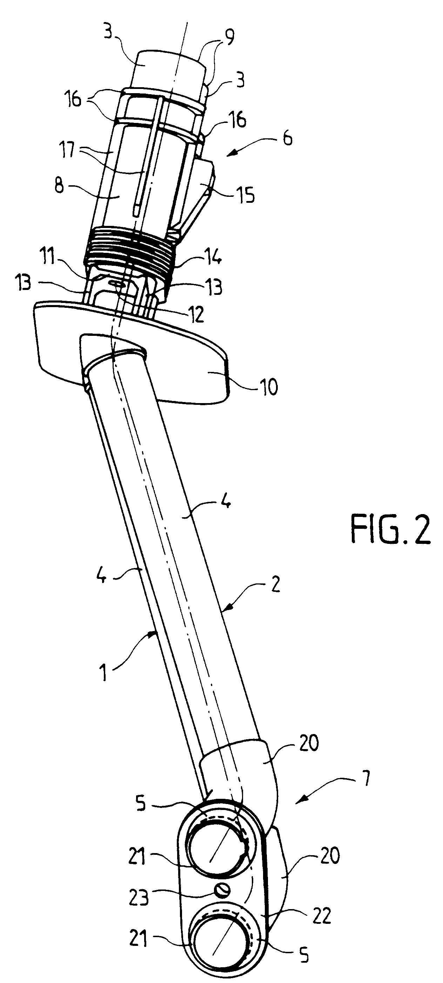

- les figures 1 et 2 sont des vues en perspective, prises selon des directions différentes, d'un dispositif selon l'invention comprenant deux tubulures juxtaposées; et

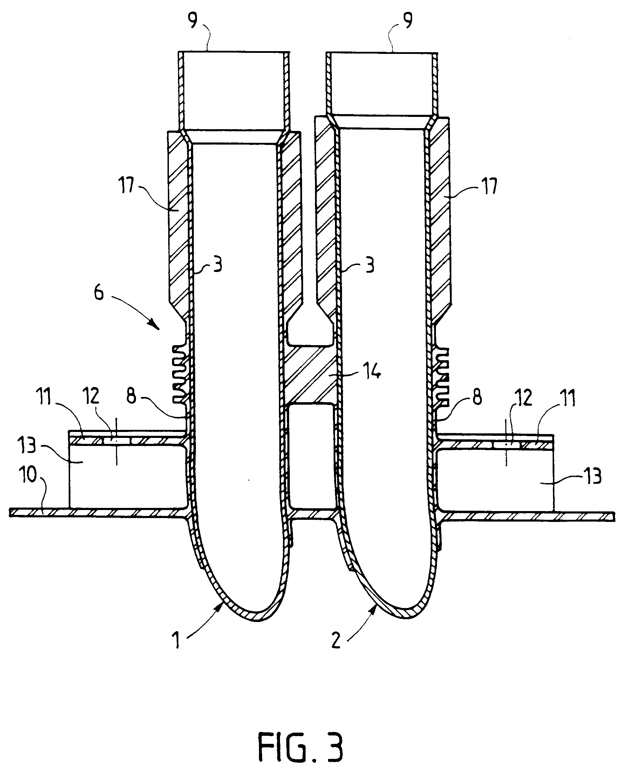

- la figure 3 est une vue en coupe axiale d'une région d'extrémité de ce dispositif.

Le dispositif illustré comprend deux tubulures métalliques 1 et 2, par exemple en laiton ou en alliage d'aluminium. Chacune de ces tubulures présente deux coudes délimitant trois sections sensiblement rectilignes 3, 4 et 5, et deux masses 6 et 7 de matière thermoplastique surmoulées sur les deux tubulures les lient entre elles de façon que ces sections rectilignes soient disposées deux à deux côte à côte et sensiblement parallèlement, à savoir les sections d'extrémités 3 et 5 et la section médiane 4 de la tubulure 2 respectivement avec les sections d'extrémités 3 et 5 et la section médiane 4 de la tubulure 1.

La masse surmoulée 6 forme deux manchons de faible épaisseur 8, 8 qui recouvrent les sections rectilignes 3 des deux tubulures et s'étendent depuis une petite distance des extrémités libres 9 de ces mêmes sections jusqu'aux coudes qui les relient aux sections 4. Ces manchons sont réunis entre eux par une platine transversale 10 située dans un plan perpendiculaire à la direction longitudinale des sections 3, au niveau du raccordement entre celles-ci et les coudes, et s'étend latéralement de part et d'autre des manchons. Deux pattes de fixation 11 munies de trous de fixation respectifs 12 s'étendent également transversalement de part et d'autre des manchons, en regard de la platine 10 et plus près que celle-ci des extrémités 9, et sont reliées à la platine par des entretoises 13. Les deux manchons sont également réunis, entre les pattes 11 et les extrémités 9, par un bloc de rigidification 14 et, plus près encore des extrémités 9, par un élément de retenue 15 destiné à s'encliqueter avec un crochet solidaire d'autres organes du circuit tels que des tuyaux souples de raccordement, en vue de leur solidarisation aux tubulures. L'élément de retenue 15 est décalé par rapport au plan contenant les axes des sections 3. Enfin, deux nervures annulaires 16 sont formées autour de chacun des manchons 8, à son extrémité tournée vers l'extrémité libre 9 de la tubulure correspondante, et quatre ailettes longitudinales 17 s'étendent, également autour de chaque manchon, à partir des nervures 16 en direction du bloc 14, et s'interrompent avant ce dernier. L'élément de retenue 15 se raccorde à chaque manchon entre deux ailettes 17.

La masse surmoulée 7 forme également deux manchons 20 qui recouvrent respectivement les sections d'extrémités 5 des deux tubulures, à partir d'une petite distance de leurs extrémités libres 21, ainsi que les coudes reliant les sections 5 aux sections 4. Ces deux manchons sont réunis, au voisinage des extrémités 21, par une platine transversale 22 qui présente, entre les deux tubulures, un trou 23 pour le passage d'un élément de fixation permettant la solidarisation des extrémités des tubulures à un radiateur de circuit de refroidissement et/ou de chauffage de véhicule automobile lorsque les extrémités en saillie des sections 5 des tubulures sont engagées l'une dans une ouverture d'entrée, l'autre dans une ouverture de sortie du radiateur.

## Revendications

1. Dispositif de raccordement pour un circuit de fluide comprenant au moins une tubulure (1, 2) et des moyens de fixation (11, 15, 22) solidaires de celle-ci pour la liaison de l'une au moins de ses extrémités (3, 5) à un organe du circuit de fluide en vue d'établir une communication de fluide entre la tubulure et ledit organe, caractérisé en ce que ladite tubulure est métallique et en ce que lesdits moyens de fixation sont formés dans une masse de matière plastique (6, 7) surmoulée sur la tubulure.

2. Dispositif selon la revendication 1, caractérisé en ce que des moyens de fixation surmoulés sont formés aux deux extrémités de la tubulure pour leur liaison respective à deux organes du circuit de fluide.

3. Dispositif selon l'une des revendications 1 et 2, caractérisé en ce que la tubulure comporte au moins un coude.

4. Dispositif selon l'une des revendications précédentes, caractérisé en ce qu'il comprend deux tubulures métalliques juxtaposées (1, 2) et au moins une masse monobloc de matière plastique (6, 7) surmoulée sur les deux tubulures dans la région d'une extrémité (3, 5) de chacune d'elles, ladite masse monobloc assurant la solidarisation mutuelle des deux tubulures dans ladite région et constituant des moyens de fixation pour la liaison de celles-ci à au moins un organe du circuit.

5. Utilisation du dispositif selon la revendication 4, dans laquelle les moyens de fixation relient les deux tubulures à un même organe du circuit.

6. Utilisation selon la revendication 5, caractérisée en ce que ledit organe est un radiateur de refroidissement et/ou de chauffage de véhicule automobile, les tubulures étant reliées respectivement à une entrée de fluide et à une sortie de fluide du radiateur.

## Claims

1. A connecting device for a fluid circuit, comprising at least one pipe (1, 2), together with fastening means (11, 15, 22) fixed to the latter for its connection, at at least one of its ends (3, 5), to a component of the fluid circuit for the purpose of establishing fluid communication between the pipe and the said component, characterised in that the said pipe is of metal, and in that the said fastening means are formed in a body of plastics material (6, 7) moulded on to the pipe.

2. A device according to Claim 1, characterised in that the moulded fastening means are formed at both ends of the pipe, for their respective connection to two components of the fluid circuit.

3. A device according to Claim 1 or Claim 2, characterised in that the pipe has at least one bend.

4. A device according to one of the preceding Claims, characterised in that it comprises two juxtaposed metallic pipes (1, 2), together with at least one monobloc body of plastics material (6, 7) moulded on to the two pipes in the region of one end (3, 5) of each of the latter, with the said monobloc body securing the two pipes together in the said region and constituting fastening means for the connection of the latter to at least one component of the circuit.

5. The use of a device according to Claim 4, in which the fastening means connect the two pipes to a common component of the circuit.

6. Use according to Claim 5, characterised in that the said component is a motor vehicle cooling and/or heating radiator, the pipes being connected, respectively, to a fluid inlet and a fluid outlet of the radiator.

## Patentansprüche

1. Anschlußvorrichtung für einen Flüssigkeitskreislauf, bestehend aus mindestens einer Rohrleitung (1, 2) und fest mit dieser verbundenen Befestigungsmitteln (11, 15, 22) für die Verbindung von mindestens einem ihrer Enden (3, 5) mit einem Organ des Flüssigkeitskreislaufs, um einen Flüssigkeitsdurchgang zwischen der Rohrleitung und dem besagten Organ herzustellen, **dadurch gekennzeichnet,** daß die besagte Rohrleitung aus Metall ausgeführt ist und daß die besagten Befestigungsmittel aus einer Kunststoffmasse (6, 7) bestehen, die auf der Rohrleitung aufgeformt ist.

2. Vorrichtung nach Anspruch 1, **dadurch gekennzeichnet,** daß aufgeformte Befestigungsmittel an den beiden Enden der Rohrleitung für ihre jeweilige Verbindung mit zwei Organen des Flüssigkeitskreislaufs ausgebildet sind.

3. Vorrichtung nach Anspruch 1 und 2 , **dadurch gekennzeichnet,** daß die Rohrleitung mindestens einen Bogen umfaßt.

4. Vorrichtung nach einem der vorangehenden Ansprüche 1, **dadurch gekennzeichnet**, daß sie zwei nebeneinanderliegende Metallrohrleitungen (1, 2) und mindestens eine einteilige Kunststoffmasse (6, 7) umfaßt, die auf den beiden Rohrleitungen im Bereich eines Endes (3, 5) jeder Rohrleitung aufgeformt ist, wobei die besagte einteilige Masse die wechselseitige Verbindung der beiden Rohrleitungen in dem besagten Bereich herbeiführt und Befestigungsmittel für ihren Anschluß an mindestens ein Organ des Kreislaufs bildet.

5. Anwendung der Vorrichtung nach Anspruch 4, bei der die Befestigungsmittel die beiden Rohrleitungen mit ein und demselben Organ des Kreislaufs verbinden.

6. Anwendung nach Anspruch 5 , **dadurch gekennzeichnet,** daß das besagte Organ ein Kühler und/oder Heizradiator eines Kraftfahrzeugs ist, wobei die Rohrleitungen mit einem Flüssigkeitseinlaß bzw. mit einem Flüssigkeitsauslaß des Kühlers oder Radiators verbunden sind.
